# FASCICULE DE BREVET EUROPEEN

(11) **EP 2 341 319 B1**
(45) Date de publication et mention de la délivrance du brevet: **29.05.2013**
(21) Numéro de dépôt: 10196114.2
(22) Date de dépôt: 21.12.2010
(51) Int. Cl.: G01C 23/00, G01C 25/00

(54) **Dispositif de sauvegarde d'informations de calibration et planche de bord d'aéronef comprenant le dispositif**
Sicherungsspeichervorrichtung für Kalibrierungsinformationen und Luftfahrzeuginstrumentenbrett das die Vorrichtung einbettet
Backup storage device for calibration information and aircraft instrument panel embedding said device

(30) Priorité: 30.12.2009 FR 0906404
(43) Date de publication de la demande: 06.07.2011
(73) Titulaire: Thales, 92200 Neuilly Sur Seine (FR)
(72) Inventeur: Colliau, Florent, 41190, Chambon Sur Cisse (FR); Gardere, Frédéric, 41100, Vendome (FR); Jaulain, Yves, 86140, Scorbe Clairvaux (FR)
(74) Mandataire: Collet, Alain

(56) Documents cités:
- DE-U1-202007 016 235
- FR-A1- 2 925 670
- US-A1- 2003 225 493

## Description

L'invention concerne un dispositif de sauvegarde d'informations de calibration et une planche de bord d'aéronef comprenant le dispositif.

La planche de bord d'un aéronef comprend de nombreux instruments de navigation nécessitant la possibilité d'un démontage pour des opérations de maintenance. Plus précisément, à bord des aéronefs, des vérifications périodiques de bon fonctionnement des instruments de navigation sont régulièrement prévues. En particulier, des vérifications réglementaires interviennent avant chaque décollage de l'aéronef. En cas de panne d'un instrument, la procédure réglementaire peut imposer le remplacement de l'instrument défectueux avant le décollage. Il est donc nécessaire que le démontage de l'instrument de navigation et le remontage d'un nouvel instrument de remplacement puisse se faire dans un temps le plus réduit possible.

Certains instruments de navigation sont couplés à des capteurs ou comprennent des capteurs nécessitant une calibration complexe. Par exemple, un instrument comprenant un magnétomètre permettant de donner le cap de l'aéronef doit être calibré dans son environnement opérationnel. En effet, le magnétomètre est destiné à mesurer le champ magnétique terrestre. Les autres instruments de l'aéronef perturbent la mesure du magnétomètre. Ces perturbations peuvent entrainer des erreurs de cap de plusieurs dizaines de degrés. L'ensemble de ces erreurs est souvent appelée déviation magnétique. Il est néanmoins possible de corriger cette déviation. Une procédure classique de calibration prévoit d'orienter l'aéronef au sol selon des directions connues et de noter pour chaque direction la différence entre la mesure de cap faite au moyen du magnétomètre et le cap réel de l'aéronef. A partir de ces différences et au moyen d'algorithmes de comprensation, il est possible de corriger l'erreur de mesure et ainsi de délivrer une information fiable au pilote de l'aéronef.

Ce type de calibration peut prendre plusieurs heures et pour des avions commerciaux il est difficilement envisageable de la réaliser avant un décollage notamment lorsque les passagers sont déjà présents à bord. Une autre procédure permet d'effectuer la calibration en vol. Cette procédure est tout aussi délicate à mettre en oeuvre.

On s'est rendu compte que les différents paramètres de calibration, telle que la déviation magnétique, sont essentiellement fonction de l'aéronef et peuvent être réutilisés en cas de remplacement de l'instrument de navigation. Il est possible de déposer l'instrument endommagé, de récupérer ses paramètres de calibration pour les réintroduire dans le nouvel instrument lors de sa mise en place. Cette procédure permet de d'éviter la calibration complète du nouvel instrument mais nécessite un appareillage spécifique de maintenance permettant l'exportation des informations de calibration de l'instrument endommagé vers l'instrument de remplacement.

Le document FR2925670 décrit un dispositif de sauvegarde d'informations de calibration d'un instrument de navigation aérienne, destiné à être embarqué dans un aéronef, l'instrument de navigation aérienne comprenant un premier connecteur destiné à être raccordé à un deuxième connecteur appartenant à l'aéronef, le dispositif comprenant des moyens de sauvegarde sous forme de mémoire interne à l'instrument et qui permettent de sauvegarder les informations de calibration de l'instrument.

Le document US2003/225493 décrit un dispositif adapté à la sauvegarde d'informations de calibration d'un premier module de détection (détecteur de passager) embarqué dans un véhicule automobile, le dispositif étant constitué d'un autre module de détection externe au premier (contrôle d'airbags) et indépendant de celui-ci.

Le document DE20 2007016235 décrit aussi un dispositif adapté à la sauvegarde d'informations de calibration d'un capteur, dans les domaines de la mesure de température ou de pression, le dispositif étant externe au capteur.

Un objet de l'invention est de permettre le remplacement d'un instrument nécessitant une calibration sans appareillage spécifique de maintenance.

Un autre objet de l'invention est un dispositif solidaire de l'aéronef et permettant de récupérer les paramètres de calibration d'un instrument dont on réalise le remplacement.

Dans un mode de réalisation préféré de l'invention, elle a pour objet un dispositif de sauvegarde d'informations de calibration d'un instrument de navigation aérienne destiné à être embarqué dans un aéronef, l'instrument de navigation aérienne comprenant un premier connecteur destiné à être raccordé à un deuxième connecteur appartenant à l'aéronef,
caractérisé en ce que le dispositif est prévu pour être raccordé entre le premier et le deuxième connecteur,
en ce que le dispositif comprend un troisième connecteur semblable au premier connecteur et prévu pour être raccordé sur le deuxième connecteur et un quatrième connecteur semblable au deuxième connecteur et prévu pour être raccordé sur le premier connecteur,
en ce que le dispositif est configuré pour que toutes les liaisons du deuxième connecteur traversent le dispositif vers le quatrième connecteur sans interaction électrique avec le dispositif,
et en ce que le dispositif comprend des moyens de sauvegarde configurés pour être uniquement raccordés à l'instrument de navigation aérienne au moyen des premier et quatrième connecteurs et adapté à mémoriser les informations de calibration dudit instrument de navigation.

Encore un autre objet de l'invention est une planche de bord d'aéronef comprenant un dispositif de sauvegarde selon l'invention et un instrument de navigation aérienne.

L'invention permet de mettre en oeuvre un dispositif de sauvegarde sans modification du câblage déjà présent dans l'aéronef.

L'invention sera mieux comprise et d'autres avantages apparaîtront à la lecture de la description détaillée d'un mode de réalisation donné à titre d'exemple, description illustrée par le dessin joint dans lequel :
la figure 1 représente en perspective un instrument de secours ;
la figure 2 représente l'instrument de la figure 1 monté dans une planche de bord d'un aéronef ;
la figure 3 représente, à l'intérieur de la planche de bord, un dispositif de sauvegarde associé à l'instrument de secours ;
la figure 4 représente l'intérieur du dispositif de sauvegarde.

Par souci de clarté, les mêmes éléments porteront les mêmes repères dans les différentes figures.

L'invention est décrite en rapport à un instrument de secours équipant la planche de bord d'un aéronef. Il est bien entendu possible de mettre en oeuvre l'invention pour d'autres instruments de navigation comme par exemple des instruments primaires.

Un instrument de secours permet de déterminer et d'afficher de façon autonome, une altitude, une vitesse, une attitude et un cap de l'aéronef à partir de capteurs appartenant à l'instrument. En cas de défaut des instruments primaires ou de défauts d'affichage des écrans de visualisation primaire, l'écran de l'instrument de secours est utilisé par les pilotes de l'aéronef. En phase de vol, même si les instruments primaires sont opérationnels, les pilotes observent néanmoins l'écran de l'instrument de secours et notent les écarts éventuels avec les informations délivrées par les instruments primaires.

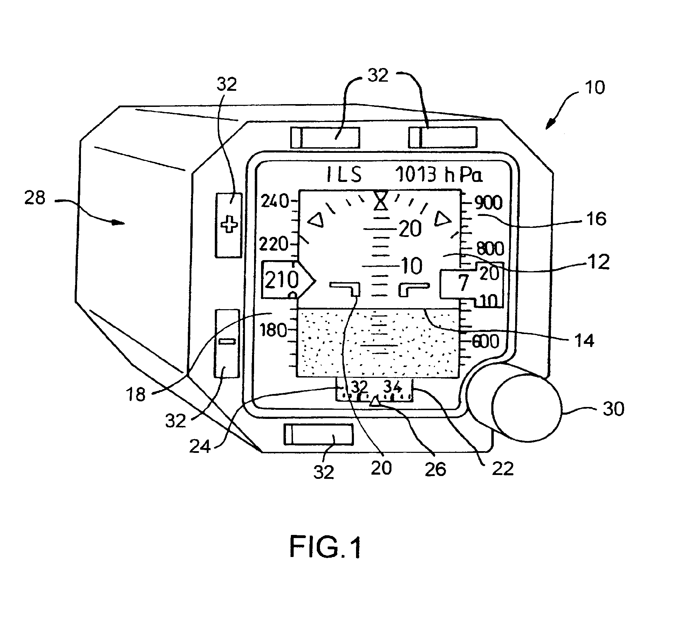

La figure 1 représente un instrument combiné de secours 10 équipant la planche de bord d'un aéronef. L'instrument de secours 10 comporte un écran en couleur 12 pour l'affichage d'un horizon 14 (terre en marron au-dessous, ciel en bleu au-dessus) et de données de secours nécessaires au pilotage, à savoir principalement altitude sous forme d'une échelle graduée défilante 16 à droite, vitesse sous forme d'une autre échelle graduée défilante 18 à gauche, et un symbole 20 d'attitude de l'aéronef. Une zone 22 est réservée aux informations de cap présenté également sous forme d'une échelle graduée 24 défilant devant un index 26 fixe.

L'affichage de l'horizon et des données numériques de vitesse, d'altitude et de cap est déterminé par un calculateur 28 situé dans le corps de l'instrument de secours 10 à partir de signaux en provenance de capteurs dont certains sont extérieurs à l'instrument 10 et dont d'autres peuvent être à l'intérieur ou à l'extérieur de l'instrument 10. Les capteurs sont en général des capteurs de pression (pour la vitesse et pour l'altitude), une unité de mesure inertielle pour l'attitude et un ou plusieurs capteurs de champ magnétiques couramment appelés magnétomètres pour le cap. Avantageusement, les capteurs de pressions, l'unité de mesure inertielle et le magnétomètre sont situés à l'intérieur de l'instrument de secours 10. Les capteurs de pression sont reliés à des prises de pression situés sur la peau de l'aéronef et permettent de mesurer la pression statique et la pression totale de l'air entourant l'aéronef.

L'instrument de secours 10 comporte en général un bouton de réglage 30 servant au recalage de la pression atmosphérique en fonction de données communiquées localement (par exemple fournies par les services de météorologie à proximité d'un aéroport). Il comporte d'autres boutons de commande 32 servant à divers usages (recalage d'horizon, mise en place sur l'écran de marques de plages de vitesse ou d'altitude autorisées, etc.).

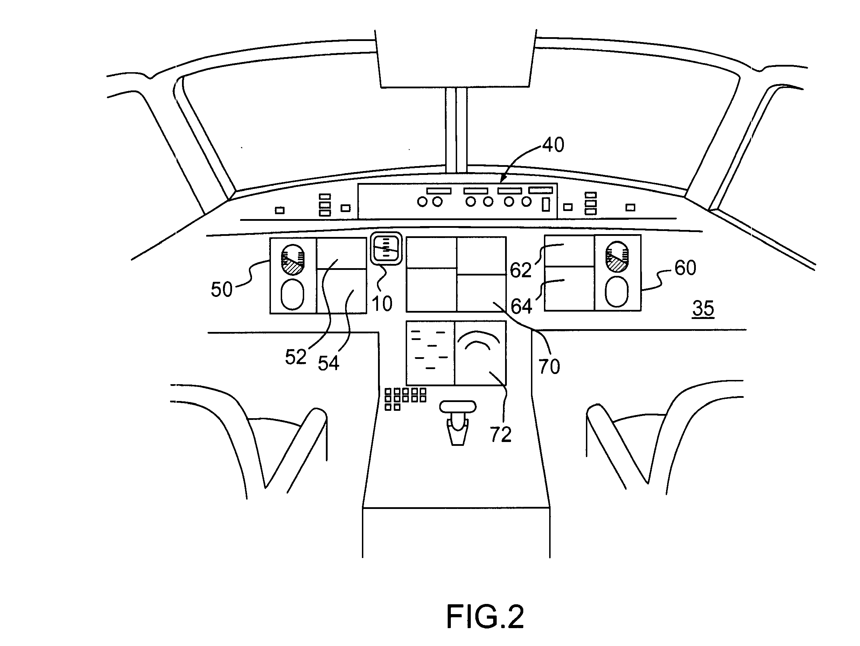

La figure 2 représente une planche de bord 35 d'avion de transport de passagers, avec poste de pilote et poste de copilote. Le système d'affichage principal comprend plusieurs écrans de pilotage et de navigation. Pour le pilotage, l'horizon et les données de pilotage sont affichées sur un écran 50 du pilote et un écran 60 du copilote. D'autres écrans 52, 54, pour le pilote, 62, 64 pour le copilote, et 70, 72 communs au pilote et au copilote fournissent d'autres indications utiles au pilotage ou à la navigation. L'instrument de secours 10 est placé du côté du pilote. Un tableau de commande de pilotage automatique 40, unique, est placé au dessus de l'ensemble des systèmes d'affichage de pilotage et de navigation. Certains avions gros porteurs disposent de deux instruments de secours 10, l'un à usage du pilote et l'autre à usage du copilote.

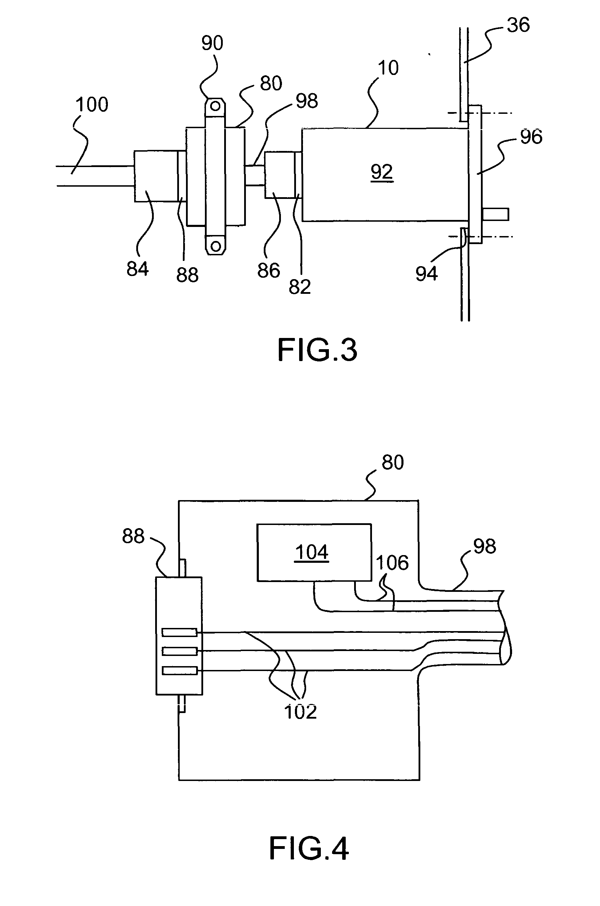

La figure 3 représente un dispositif de sauvegarde 80 associé à l'instrument de secours 10. La planche de bord 35 comprend une plaque 36 sur laquelle sont fixés les différents instruments de navigation et en particulier l'instrument de secours 10. L'instrument de secours 10 comprend un premier connecteur 82 destiné à être raccordé, en l'absence du dispositif de sauvegarde 80, à un second connecteur 84 appartenant l'avion. Le dispositif de sauvegarde 80 est raccordé entre les connecteurs 82 et 84.

Le dispositif de sauvegarde 80 comprend un connecteur 86 semblable au connecteur 84 et prévu pour être raccordé sur le connecteur 82 de l'instrument de secours 10 ainsi qu'un connecteur 88 semblable au connecteur 82 et prévu pour être raccordé sur le connecteur 84 de l'avion. Le dispositif de sauvegarde 80 comprend des moyens de fixation destinés à le rendre solidaire de l'aéronef et en particulier de la planche de bord 35. Dans l'exemple représenté une bride 90 forme ces moyens de fixation.

La planche de bord 35 comprend des moyens pour permettre une dépose de l'instrument de secours 10 tout en maintenant le dispositif de sauvegarde 80 solidaire de l'aéronef. A cet effet, un corps 92 de l'instrument de secours 10 peut être mis en place au travers d'une ouverture 94 de la plaque 36. Une face avant 96 de l'instrument de secours 10 prend alors appui contre la plaque 36 et des moyens de verrouillage, comme par exemple des vis quart de tour, non représentées, assurent le maintien en position de l'instrument de secours 10 sur la plaque 36. Le dispositif de sauvegarde 80 peut comprendre un câble souple 98 se terminant par le connecteur 86. Ainsi, pour déposer l'instrument de secours 10, on défait les moyens de verrouillages pour extraire le corps 92 de la planche de bord 35 par l'ouverture 94. Le câble souple 98 a une longueur suffisante pour permettre au corps 92 de l'instrument de secours 10 de sortir complètement de l'ouverture 94 tout en conservant la connexion de l'instrument de secours 10 et du dispositif de sauvegarde 80. La déconnexion peut alors se faire aisément à l'extérieur de la planche de bord 35. La repose de l'instrument de secours 10 se fait en inversant les opérations de dépose. On réalise d'abord la connexion de l'instrument de secours 10 au dispositif de sauvegarde puis on positionne l'instrument de secours 10 dans l'ouverture 94 et on le fixe sur la planche de bord 35.

En variante, il est possible de fixer le dispositif de sauvegarde sur l'instrument de secours 10. Le connecteur 84 peut former une extrémité d'un câble souple 100 souvent appelé câble avion. Dans cette variante, lors de la dépose de l'instrument de secours 10, la souplesse du câble avion 100 permet de sortir le connecteur 84 par l'ouverture 94. A l'extérieur de la planche de bord, on pourra désaccoupler électriquement et mécaniquement le dispositif de sauvegarde 80 et l'instrument de secours 10. Lors de cette opération, le dispositif de sauvegarde 80 reste solidaire du câble avion 100.

La figure 4 représente l'intérieur du dispositif de sauvegarde 80. Le dispositif de sauvegarde 80 apparait être en coupure dans la liaison entre l'instrument de secours 10 et le câble avion 100. Ceci est vrai mécaniquement mais pas électriquement. On dit que le dispositif de sauvegarde est transparent électriquement entre l'instrument de secours 10 et le câble avion 100. Autrement dit, toutes les liaisons 102 du câble avion 100 aboutissant au connecteur 84 traversent le dispositif de sauvegarde 80 vers le connecteur 86 sans interaction électrique avec le dispositif de sauvegarde 80. Parmi ces liaisons dites transparentes, on distingue par exemple, des liaisons d'alimentation de l'instrument de secours 10 et des liaisons permettant un échange d'informations entre l'avion et l'instrument de secours 10. Ces liaisons sont par exemple définies par un standard de communication aéronautique comme par exemple un des standards ARINC (Aeronautical Radio Incorporated) mis en oeuvre par de nombreux constructeurs et compagnies aériennes.

Le dispositif de sauvegarde 80 comprend des moyens de sauvegarde 104 uniquement raccordés à l'instrument de secours 10 au moyen des connecteurs 82 et 86 au travers du câble 98. Des liaisons 106 assurent l'alimentation des moyens de sauvegarde 104 par l'instrument de secours 10 et le transfert d'informations entre les moyens de sauvegarde 104 et l'instrument de secours 10 Aucune liaison ne transite directement du câble avion 100 vers les moyens de sauvegarde 104. Le connecteur 84 formant l'extrémité du câble avion 100 comprend généralement des broches inutilisées. Les broches correspondantes du connecteur 82 de l'instrument de secours 10 sont utilisées pour les liaisons 106.

Le dispositif de sauvegarde permet de mémoriser des informations de calibration de l'instrument de secours 10. Ainsi une calibration réalisée sur un instrument de secours 10 peut être réutilisée en cas de remplacement de ce dernier suite par exemple à une panne.

L'instrument de secours 10 comprend avantageusement un magnétomètre permettant de déterminer le cap de l'avion et de l'afficher dans la zone 22 de l'écran 12. Le magnétomètre peut également être situé à l'extérieur de l'instrument de secours 10. Les informations qu'il délivre sont alors véhiculées par le cable avion 100 vers l'instrument de secours 10. Comme on l'a vu précédemment, la calibration du magnétomètre est une opération longue et permet de déterminer les corrections à apporter aux valeurs mesurées par le magnétomètre en fonction de l'environnement auquel est soumis l'instrument de secours 10. L'ensemble de ces corrections forment les informations de calibration concernant le magnétomètre. Ces informations sont mémorisées dans les moyens de sauvegarde 104.

Avantageusement, l'instrument de secours 10 comprend des moyens pour stocker les informations de calibration à chaque interruption d'alimentation de l'instrument secours 10. Lorsque l'instrument de secours 10 n'est plus alimenté, le dispositif de sauvegarde 80 perd également son alimentation. Pour conserver les informations de calibration on peut prévoir que les moyens de sauvegarde 104 comprennent une mémoire non volatile, comme par exemple une mémoire en lecture seule effaçable électriquement bien connue dans la littérature anglo-saxonne sons le nom de « EEPROM » ou encore une mémoire en lecture seule programmable rapide bien connue dans la littérature anglo-saxonne sons le nom de « FlashPROM ». A chaque rétablissement de l'alimentation de l'instrument de secours 10, celui-ci vient récupérer les informations de calibration dans le dispositif de sauvegarde 80.

Ainsi, pour procéder au remplacement de l'instrument de secours 10, il ne sera pas nécessaire de prévoir de procédure particulière de sauvegarde des informations de calibration. Avant son démontage, l'instrument de secours 10 mémorise ses informations de calibration dans dispositif de sauvegarde 80 dès la coupure d'alimentation. Le nouvel instrument de secours 10 vient récupérer ces mêmes informations dès sa mise sous tension.

## Revendications

1. Dispositif de sauvegarde d'informations de calibration d'un instrument de navigation aérienne (10) destiné à être embarqué dans un aéronef, l'instrument de navigation aérienne (10) comprenant un premier connecteur (82) destiné à être raccordé à un deuxième connecteur (84) appartenant à l'aéronef,
**caractérisé en ce que** le dispositif est prévu pour être raccordé entre le premier (82) et le deuxième (84) connecteur,
**en ce que** le dispositif comprend un troisième connecteur (88) semblable au premier connecteur (82) et prévu pour être raccordé sur le deuxième connecteur (84) et un quatrième connecteur (86) semblable au deuxième connecteur (84) et prévu pour être raccordé sur le premier connecteur (82),
en ce quele dispostif est configuré pour que toutes les liaisons du deuxième connecteur (84) traversent le dispositif vers le quatrième connecteur (86) sans interaction électrique avec le dispositif,
et **en ce que** le dispositif comprend des moyens de sauvegarde (104) configurés pour être uniquement raccordés à l'instrument de navigation aérienne (10) au moyen des premier (82) et quatrième (86) connecteurs et adapté à mémoriser les informations de calibration dudit instrument de navigation

2. Dispositif selon la revendication 1, **caractérisé en ce que** les moyens de sauvegarde (104) sont alimentés par l'instrument de navigation aérienne (10).

3. Dispositif selon l'une des revendications précédentes, caractérisé en ce les moyens de sauvegarde (104) comprennent une mémoire non volatile.

4. Dispositif selon l'une des revendications précédentes, **caractérisé en ce qu'**il comprend des moyens de fixation (90) destinés à le rendre solidaire de l'aéronef.

5. Planche de bord d'aéronef comprenant un dispositif de sauvegarde (80) selon l'une des revendications précédentes et un instrument de navigation aérienne (10).

6. Planche de bord d'aéronef selon la revendication 5, **caractérisé en ce qu'**il comprend des moyens pour permettre une dépose de l'instrument de navigation aérienne tout en maintenant le dispositif de sauvegarde (80) solidaire de l'aéronef.

7. Planche de bord d'aéronef selon l'une quelconques des revendications 5 ou 6, **caractérisé en ce que** l'instrument de navigation aérienne (10) comprend un magnétomètre et **en ce que** les informations de calibration concernent le magnétomètre.

8. Planche de bord d'aéronef selon l'une quelconques des revendications 5 à 7, **caractérisé en ce que** l'instrument de navigation aérienne (10) comprend des moyens pour stocker les informations de calibration à chaque interruption d'alimentation de l'instrument de navigation aérienne (10).

9. Planche de bord d'aéronef selon l'une quelconques des revendications 5 à 8, **caractérisé en ce que** l'instrument de navigation aérienne est un instrument de secours (10) et **en ce qu'**il comprend des moyens de détermination et d'affichage (12) de l'altitude, de l'attitude et du cap de l'aéronef.

## Patentansprüche

1. Vorrichtung zum Speichern von Kalibrationsinformationen für ein Flugnavigationsinstrument (10) zur Installation in einem Luftfahrzeug, wobei das Flugnavigationsinstrument (10) ein erstes Verbindungsstück (82) zum Anschließen an einem zweiten Verbindungsstück (84) umfasst, das zu dem Luftfahrzeug gehört,
**dadurch gekennzeichnet, dass** die Vorrichtung für den Anschluss zwischen dem ersten (82) und dem zweiten (84) Verbindungsstück vorgesehen ist,
und dadurch, dass die Vorrichtung ein drittes Verbindungsstück (88) umfasst, das dem ersten Verbindungsstück (82) ähnlich und zum Anschließen am zweiten Verbindungsstück (84) vorgesehen ist, und ein viertes Verbindungsstück (86), das dem zweiten Verbindungsstück (84) ähnlich ist und zum Anschließen am ersten Verbindungsstück (82) vorgesehen ist,
und dadurch, dass die Vorrichtung so konfiguriert ist, dass alle Verbindungen des zweiten Verbindungsstücks (84) die Vorrichtung zum vierten Verbindungsstück (86) ohne elektrische Interaktion mit der Vorrichtung durchqueren,
und dadurch, dass die Vorrichtung Speichermittel (104) umfasst, die für den ausschließlichen Anschluss an das Flugnavigationsinstrument (10) mittels des ersten (82) und des vierten (86) Verbindungsstücks konfiguriert und zum Speichern der Kalibrationsinformationen des Navigationsinstruments ausgelegt sind.

2. Vorrichtung nach Anspruch 1, **dadurch gekennzeichnet, dass** die Speichermittel (104) von dem Flugnavigationsinstrument (10) gespeist werden.

3. Vorrichtung nach einem der vorherigen Ansprüche, **dadurch gekennzeichnet, dass** die Speichermittel (104) einen nichtflüchtigen Speicher umfassen.

4. Vorrichtung nach einem der vorherigen Ansprüche, **dadurch gekennzeichnet, dass** sie Befestigungsmittel (90) umfasst, um sie fest mit dem Luftfahrzeug zu verbinden.

5. Luftfahrzeuginstrumentenbrett, das eine Speichervorrichtung (80) nach einem der vorherigen Ansprüche und ein Flugnavigationsinstrument (10) umfasst.

6. Luftfahrzeuginstrumentenbrett nach Anspruch 5, **dadurch gekennzeichnet, dass** es Mittel umfasst, um das Flugnavigationsinstrument zu demontieren, während die Speichervorrichtung (80) fest mit dem Luftfahrzeug verbunden bleibt.

7. Luftfahrzeuginstrumentenbrett nach Anspruch 5 oder 6, **dadurch gekennzeichnet, dass** das Flugnavigationsinstrument (10) ein Magnetometer umfasst, und dadurch, dass die Kalibrationsinformationen das Magnetometer betreffen.

8. Luftfahrzeuginstrumentenbrett nach einem der Ansprüche 5 bis 7, **dadurch gekennzeichnet, dass** das Flugnavigationsinstrument (10) Mittel zum Speichern der Kalibrationsinformationen bei jeder Unterbrechung der Versorgung des Flugnavigationsinstruments (10) umfasst.

9. Luftfahrzeuginstrumentenbrett nach einem der Ansprüche 5 bis 8, **dadurch gekennzeichnet, dass** das Flugnavigationsinstrument ein Hilfsinstrument (10) ist, und dadurch, dass es Mittel zum Bestimmen und Anzeigen (12) von Höhe, Lage und Kurs des Luftfahrzeugs umfasst.

## Claims

1. Device for protecting information for calibrating an air navigation instrument (10) which is intended to be fitted in an aircraft, the air navigation instrument (10) comprising a first connector (82) which is intended to be connected to a second connector (84) which belongs to the aircraft,
**characterised in that** the device is provided to be connected between the first connector (82) and the second connector (84),
**in that** the device comprises a third connector (88) which is similar to the first connector (82) and which is provided to be connected to the second connector (84) and a fourth connector (86) which is similar to the second connector (84) and which is provided to be connected to the first connector (82),
**in that** the device is configured so that all the connections of the second connector (84) pass through the device towards the fourth connector (86) without electrical interaction with the device,
and **in that** the device comprises storage means (104) which are configured to be connected only to the air navigation instrument (10) by means of the first connectors (82) and fourth connectors (86) and which is capable of storing the calibration information of the navigation instrument.

2. Device according to claim 1, **characterised in that** the storage means (104) are powered by the air navigation instrument (10).

3. Device according to either of the preceding claims, **characterised in that** the storage means (104) comprise a non-volatile memory.

4. Device according to any one of the preceding claims, **characterised in that** it comprises fixing means (90) which are intended to fixedly join it to the aircraft.

5. Aircraft instrument panel comprising a storage device (80) according to any one of the preceding claims and an air navigation instrument (10).

6. Aircraft instrument panel according to claim 5, **characterised in that** it comprises means to allow the air navigation instrument to be removed whilst the storage device (80) remains fixedly joined to the aircraft.

7. Aircraft instrument panel according to either claim 5 or claim 6, **characterised in that** the air navigation instrument (10) comprises a magnetometer and **in that** the calibration information relates to the magnetometer.

8. Aircraft instrument panel according to any one of claims 5 to 7, **characterised in that** the air navigation instrument (10) comprises means for storing the calibration information each time the power supply to the air navigation instrument (10) is interrupted.

9. Aircraft instrument panel according to any one of claims 5 to 8, **characterised in that** the air navigation instrument is an emergency instrument (10) and **in that** it comprises means (12) for determining and displaying the altitude, attitude and course of the aircraft.
